# EUROPEAN PATENT APPLICATION

(11) **EP 1 480 022 A2**
(43) Date of publication of application: **24.11.2004**
(21) Application number: 04011682.4
(22) Date of filing: 17.05.2004
(51) Int. Cl.: G01F 23/30, G01F 23/76

(54) **Fuel float gauge**

(30) Priority: 23.05.2003 JP 2003146241
(71) Applicant: Hitachi Unisia Automotive Ltd., Atsugi-shi, Kanagawa 243-8510 (JP)
(72) Inventor: Kumagai, Masato, Atsugi-shi Kanagawa 243-8510 (JP)
(74) Representative: Weber, Joachim, Dr.

(57) **Abstract**

A fuel gauge includes a float vertically moving with the level of fuel in a fuel tank, an arm having a free end to which the float is supported, a detection body for supporting a base end of the arm and detecting the displacement amount of the arm and comprising a member separate and distinct from the arm, and an arm holder for detachably mounting the base end of the arm to the detection body.

## Description

### BACKGROUND OF THE INVENTION

The present invention relates to a fuel gauge for detecting the remaining amount of fuel in the fuel tank.

Various fuel gauges are available for detection of the remaining amount of fuel in the fuel tank. JP-A 9-126080 discloses a fuel pump device provided with a fuel gauge. This fuel gauge comprises a float with an arm moving vertically with the level of fuel in the fuel tank, and a detection body to which a base end of the arm of the float is supported vertically movably and for detecting the vertical displacement amount of the arm. The detection body comprises a permanent magnet fixed to the base end of the arm and a Hall element for detecting the magnetic field of the permanent magnet.

With the above structure, when the level of fuel in the fuel tank is displaced, the float moves vertically therewith. And the Hall element detects the vertical displacement of the arm of the float.

Since the mounting condition of the fuel gauge varies with the form of the fuel tank, such as height, different fuel gauges should be manufactured to respond to various gauge mounting conditions.

With the fuel gauge disclosed in JP-A 9-126080, however, when manufacturing different fuel gauges to respond to various gauge mounting conditions, design modification of both the float with arm and the detection body is needed since a magnet part of the detection body is integrated with the base end of the arm of the float. Therefore, most of parts of the fuel gauge should be changed for every gauge mounting condition, causing an increase in number of parts, control fee, and the like, resulting in a rise in manufacturing costs.

### SUMMARY OF THE INVENTION

It is, therefore, an object of the present invention to provide a fuel gauge which contributes to a reduction in manufacturing costs.

The present invention provides generally a fuel gauge, which comprises: a float which vertically moves with a level of fuel in a tank; an arm having a free end to which the float is supported; a detection body which supports a base end of the arm, the detection body detecting a displacement amount of the arm, the detection body comprising a member separate and distinct from the arm; and an arm holder which detachably mounts the base end of the arm to the detection body.

### BRIEF DESCRIPTION OF THE DRAWINGS

The other objects and features of the present invention will become apparent from the following description with reference to the accompanying drawings, wherein:

FIG. 1 is a sectional view showing an embodiment of a fuel gauge according to the present invention;

FIG. 2 is an exploded perspective view showing the fuel gauge; and

FIG. 3 is a perspective view showing the fuel gauge.

### DETAILED DESCRIPTION OF THE INVENTION

Referring to the drawings, a fuel gauge embodying the present invention will be described.

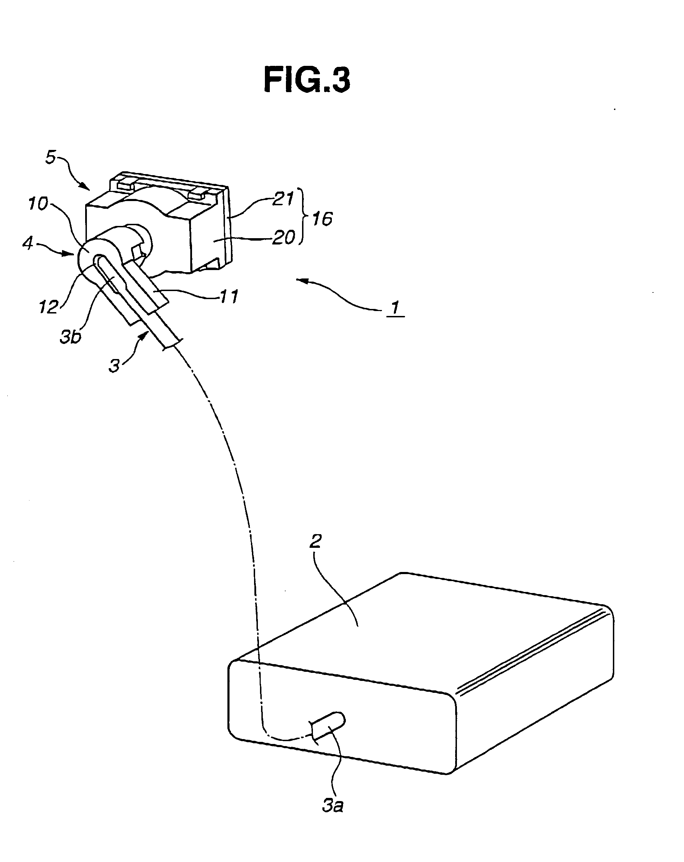

Referring to FIG. 3, a fuel gauge 1 comprises a float 2 moving vertically with the level of fuel, not shown, in a fuel tank 17, an arm 3 shaped like a metallic rod and having a free end 3a to which float 2 is supported rotatably, and a detection body 5 to which a base end 3b of arm 3 is rotatably supported through an arm holder 4 of synthetic resin.

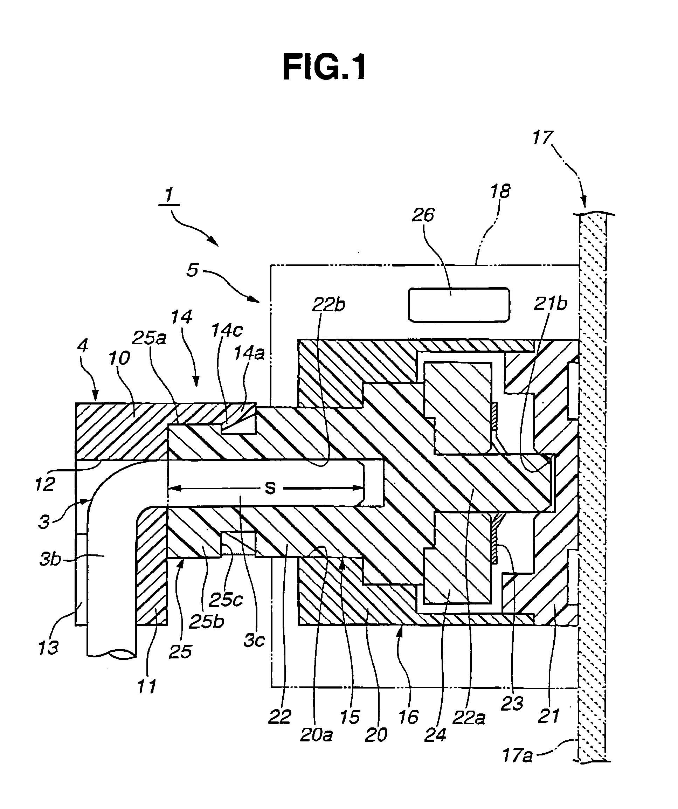

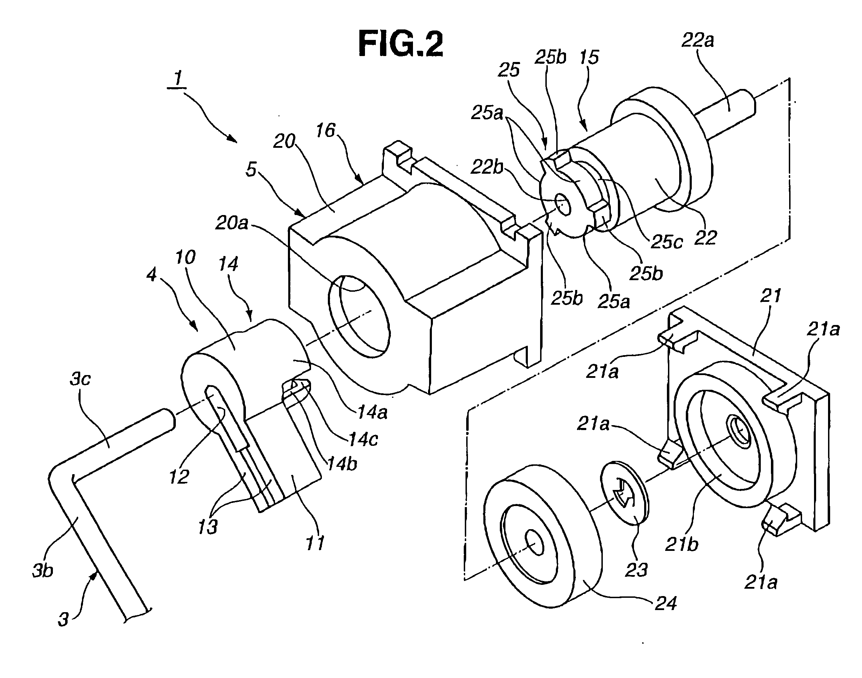

Referring to FIGS. 1 and 2, arm holder 4 comprises a cylindrical portion 10 and a holder-arm portion 11 integrally extending from the outer periphery of cylindrical portion 10 in the radial direction, i.e. the direction orthogonal to the axial direction. Cylindrical portion 10 and arm-holder portion 11 are formed with an arm fixing hole 12 having dimension roughly equal to or slightly smaller than the outer diameter of arm 3. Arm fixing hole 12 is formed through cylindrical portion 10 from the front-end face to the rear-end face, and opens to only the rear face of holder-arm portion 11. A pair of anti-disengagement protrusions 13, 13 is arranged over a given length at both edges of arm fixing hole 12 of holder-arm portion 11. The breadth between anti-disengagement protrusions 13, 13 is set to be narrow.

With anti-disengagement protrusions 13, 13 deformed by compression, base end 3b of arm 3 is inserted into arm fixing hole 12. When base end 3b reaches the interior of anti-disengagement protrusions 13, 13, protrusions 13, 13 resiliently return to the original state to fix arm 3. Arm 3 has a front end 3c bent like a letter L from base end 3b, front end 3c being fixed to arm holder 4 so as to protrude from the front-end face of cylindrical portion 10 of arm holder 4. A holder-side engagement 14 is integrally protuberantly formed with a front end of cylindrical portion 10 of arm holder 4.

Detection body 5 comprises a rotor 15 rotated together with arm 3, a stator 16 for rotatably supporting rotor 15, and a bracket 18 for supporting stator 16 and mounting stator 16 to a wall 17a of fuel tank 17.

Stator 16 comprises a casing body 20 and a lid 21 latched to casing body 20 by latching pawls 21a, and has rotor 15 rotatably supported therein. Rotor 15 comprises a rotation shaft 22 having multi-step cylindrical shape and a magnet 24 arranged through a small-diameter portion 22a of rotation shaft 22 and retained by a snap ring 23 for anti-disengagement. Rotation shaft 22 has both sides supported by a shaft support hole 20a of casing body 20 and a shaft support groove 21 b of lid 21, respectively. An arm insertion hole 22b is axially formed through rotation shaft 22, and opens to the front-end face of rotation shaft 22. A detection-side engagement 25 is arranged at a front end of rotation shaft 22 to protrude outward from shaft support hole 20a of casing body 20.

N and S poles are alternately arranged on the outer peripheral surface of magnet 24 along the circumferential direction. A rotation-angle sensor 26 is arranged in bracket 18 at a position opposite to the outer periphery of magnet 24. Rotation-angle sensor 26 generates a voltage in response to a change in magnetic field of magnet 24 to output rotation-angle information. A connector, not shown, is provided to bracket 18 so as to ensure electric connection between rotation-angle sensor 26 and the outside.

Next, the structure of holder-side engagement 14 and detection-side engagement 25 will be described. Holder-side engagement 14 comprises three resilient latching pawls 14a arranged circumferentially to axially protrude to a front end of engagement 14, and three engaging grooves 14b formed between adjacent latching pawls 14a. Each resilient latching pawl 14a includes a pawl portion 14c on the inner peripheral surface of the front end, and is resiliently deformable outward in the radial direction thereof.

Detection-side engagement 25 comprises three insertion recesses 25a formed circumferentially to have a range corresponding to resilient latching pawls 14a, three engaging protrusions 25b formed between adjacent insertion recesses 25a to protrude radially, and a circumferential groove 25c formed at the position interior of insertion recesses 25a and engaging protrusions 25b.

Resilient latching pawls 14a of holder-side engagement 14 are engaged in insertion recesses 25a of detection-side engagement 25, whereas engaging protrusions 25b of detection-side engagement 25 are engaged in engaging grooves 14b of holder-side engagement 14. And resilient latching pawls 14a of holder-side engagement 14 are latched in circumferential groove 25c of detection-side engagement 25.

Next, manufacturing of fuel gauge 1 responding to a given gauge mounting condition will be described. It is noted that the mounting condition of fuel gauge 1 varies with the size, form, and the like of fuel tank 17.

It is prepared arm 3 and float 2 adapted to the given gauge mounting condition. Arm holder 4 is fixed to base end 3b of arm 3. With front end 3c of arm 3 inserted into arm insertion hole 22b of rotation shaft 22, holder-side engagement 14 of arm holder 4 and detection-side engagement 25 of detection body 5 are engaged with each other. In such a way, by mounting arm 3 to detection body 5 through arm holder 4, fuel gauge 1 adapted to the given gauge mounting condition can be obtained. That is, since a single type of detection body 5 can be used in various gauge mounting conditions, only arm 3 and float 2 of fuel gauge 1 need to be changed for each gauge mounting condition, allowing a reduction in number of parts, control fee, and the like, resulting in a lowering of manufacturing costs. Moreover, easy packing can be achieved by removing arm 3 and float 2 removed from detection body 5 during transport and mounting them thereto after completion of transport.

Next, mounting of arm 3 to detection body 5 will be described. First, arm 3 is engaged in arm fixing hole 12 of arm holder 4 to fix arm holder 4 to base end 3b of arm 3.

Then, with arm 3 axially aligned with rotation shaft 22 of detection body 5, front end 3c of arm 3 is inserted into arm insertion hole 22b of rotation shaft 22. When front end 3c of arm 3 is further inserted therein to have holder-side engagement 14 adjacently facing detection-side engagement 25, resilient latching pawls 14a of holder-side engagement 14 is adjusted in rotation position to correspond to insertion recesses 25a of detection-side engagement 25, engaging holder-side engagement 14 with detection-side engagement 25.

Then, resilient latching pawls 14a abut on the edges of insertion recesses 25a to receive a reaction force therefrom, causing resilient deformation, thus allowing engagement in insertion recesses 25a. Together with engagement of resilient latching pawls 14a in insertion recesses 25a, engaging protrusions 25b of detection-side engagement 25 are engaged in engaging grooves 14b of holder-side engagement 14.

When pawl portions 14c of resilient latching pawls 14 pass insertion recesses 25a to reach circumferential groove 25c, resilient latching pawls 14 resiliently return to the original state to have pawl portions 14c latched in circumferential groove 25c. Then, engagement between holder-side engagement 14 and detection-side engagement 25 is completed.

Arm 3 is mounted to rotation shaft 22 of detection body 5 with inter-movement in the direction of rotation prevented since resilient latching pawls 14a of holder-side engagement 14 and engaging protrusions 25b of detection-side engagement 25 interfere with each other in the direction of rotation, and with inter-movement in the axial direction prevented since resilient latching pawls 14a of holder-side engagement 14 and circumferential groove 25c of detection-side engagement 25 interfere with each other in the axial direction.

In the illustrative embodiment, holder-side engagement 14 is provided to arm holder 4 fixed to base end 3b of arm 3, whereas detection-side engagement 25 is provided to rotor 15 of detection body 5, wherein holder-side engagement 14 and detection-side engagement 25 are engaged with each other in the axial direction of rotor 15 (rotation shaft 22), i.e. one assembling direction. Therefore, arm 3 and detection body 5 can be engaged with each other by a single assembling action, resulting in achievement of their mounting by very simple engaging work.

Further, in the illustrative embodiment, arm insertion hole 22b is axially formed through rotation shaft 22, and front end 3c of arm 3 is inserted into arm insertion hole 22b. thus mounting arm 3 to detection body 5. Therefore, arm 3 is mounted to detection body 5 in the state of being accurately centered with respect to rotation shaft 22 of rotor 15, resulting in enhancement in detection accuracy of fuel gauge 1.

Still further, in the illustrative embodiment, front end 3c of arm 3 is inserted into arm insertion hole 22b of rotation shaft 22 with a deep stroke S as shown in FIG. 1. Therefore, coupling between arm 3 and rotation shaft 22 is firmly carried out, resulting in mounting of arm 3 to detection body 5 without any backlash.

Furthermore, in the illustrative embodiment, front end 3c of arm 3 is rotatably supported by detection body 5, allowing detection of fuel-level variation in the form of conversion into angle of rotation, resulting in a reduction in mounting space of detection body 5.

In the illustrative embodiment, arm 3 and float 2 are formed of separate and distinct members. Optionally, they may be formed of an integrated member. If arm 3 and float 2 are formed of separate and distinct members as in the embodiment, a single type of float 2 can be used in some gauge mounting conditions, and thus only arm 3 of fuel gauge 1 needs to be changed for each gauge mounting condition, contributing to further reduction in number of parts.

Having described the present invention in connection with the illustrative embodiment, it is noted that the present invention is not limited thereto, and various changes and modifications can be made without departing from the scope of the present invention.

In the illustrative embodiment, arm 3 is rotatably supported by detection body 5, wherein the angle of rotation of arm 3 is sensed by rotation-angle sensor 26. Optionally, arm 3 may be mounted to a vertically moving member of detection body 5 as in the related art, wherein the vertical displacement amount of arm 3 is sensed by the sensor. Such structure provides an advantage of allowing detection of fuel-level variation without being converted into the angle of rotation.

Further, in the illustrative embodiment, rotation-angle sensor 26 is provided to bracket 18. Optionally, it may be provided to stator 16.

Still further, in the illustrative embodiment, resilient latching pawls 14a and engaging grooves 14b are provided to holder-side engagement 14, whereas insertion recesses 25a, engaging protrusion 25b, and circumferential groove 25c are provided to detection-side engagement 25. Alternatively, this combination may be reversed, i.e. the resilient latching pawls and engaging grooves are provided to detection-side engagement 25, whereas the insertion recesses, engaging protrusion, and circumferential groove are provided to holder-side engagement 14.

As described above, according to the present invention, by preparing arm 3 and float 2 adapted to the given gauge mounting condition and mounting arm 3 to detection body 5 through arm holder 4, fuel gauge 1 responding to a desired gauge mounting condition can be obtained. That is, a single type of detection body 5 can be used in various gauge mounting conditions, resulting in a reduction in manufacturing costs. Moreover, easy packing can be achieved by removing arm 3 and float 2 removed from detection body 5 during transport and mounting them thereto after completion of transport.

Further, according to the present invention, arm 3 and detection body 5 can be engaged with each other by a single assembling action, resulting in achievement of their mounting by very simple engaging work.

Still further, according to the present invention, arm 3 is mounted to detection body 5 in the state of being accurately centered with respect to rotation shaft 22 of rotor 15, resulting in enhancement in detection accuracy of fuel gauge 1.

Furthermore, according to the present invention, detection of fuel-level variation can be made in the form of conversion into angle of rotation, resulting in a reduction in mounting space of detection body 5.

Further, according to the present invention, detection of fuel-level variation can be made without being converted into the angle of rotation.

Furthermore, according to the present invention, coupling between arm 3 and rotation shaft 22 is firmly carried out, resulting in mounting of arm 3 to detection body 5 without any backlash.

The entire teachings of Japanese Patent Application P2003-146241 filed May 23, 2004 are hereby incorporated by reference.

## Claims

1. A fuel gauge, comprising:
a float which vertically moves with a level of fuel in a tank;
an arm having a free end to which the float is supported;
a detection body which supports a base end of the arm, the detection body detecting a displacement amount of the arm, the detection body comprising a member separate and distinct from the arm; and
an arm holder which detachably mounts the base end of the arm to the detection body.

2. The fuel gauge as claimed in claim 1, wherein the arm holder comprises a holder-side engagement, and the detection body comprises a detection-side engagement, wherein with the holder-side engagement and the detection-side engagement engaged with each other in one assembling direction, the arm is mounted to the detection body.

3. The fuel gauge as claimed in claim 1, wherein the detection body comprises a rotor and a stator for rotatably supporting the rotor, the rotor having a hole axially formed therethrough, wherein with the base end of the arm inserted into the hole, the arm is mounted to the detection body.

4. The fuel gauge as claimed in claim 3, wherein the arm has a front end rotatably supported by the detection body.

5. The fuel gauge as claimed in claim 1, wherein the base end of the arm is linearly movably supported by the detection body.

6. The fuel gauge as claimed in claim 4, wherein the front end of the arm is inserted into the hole of the rotor with a deep stroke.

7. The fuel gauge as claimed in claim 2, wherein the holder-side engagement comprises resilient latching pawls arranged circumferentially to axially protrude to a front end of the holder-side engagement, and engaging grooves formed between the adjacent latching pawls.

8. The fuel gauge as claimed in claim 7, wherein the detection-side engagement comprises insertion recesses formed circumferentially to have a range corresponding to the resilient latching pawls, engaging protrusions formed between the adjacent insertion recesses to protrude radially, and a circumferential groove formed at a position interior of the insertion recesses and the engaging protrusions.

9. An arrangement, comprising:
a tank which accumulates fuel;
a float which vertically moves with a level of fuel in the tank;
an arm having a free end to which the float is supported;
a detection body which supports a base end of the arm, the detection body detecting a displacement amount of the arm, the detection body comprising a member separate and distinct from the arm; and
an arm holder which detachably mounts the base end of the arm to the detection body.

10. The arrangement as claimed in claim 9, wherein the arm holder comprises a holder-side engagement, and the detection body comprises a detection-side engagement, wherein with the holder-side engagement and the detection-side engagement engaged with each other in one assembling direction, the arm is mounted to the detection body.

11. The arrangement as claimed in claim 9, wherein the detection body comprises a rotor and a stator for rotatably supporting the rotor, the rotor having a hole axially formed therethrough, wherein with the base end of the arm inserted into the hole, the arm is mounted to the detection body.

12. The arrangement as claimed in claim 11, wherein the arm has a front end rotatably supported by the detection body.

13. The arrangement as claimed in claim 9, wherein the base end of the arm is linearly movabiy supported by the detection body.

14. The arrangement as claimed in claim 12, wherein the front end of the arm is inserted into the hole of the rotor with a deep stroke.

15. The arrangement as claimed in claim 10, wherein the holder-side engagement comprises resilient latching pawls arranged circumferentially to axially protrude to a front end of the holder-side engagement, and engaging grooves formed between the adjacent latching pawls.

16. The arrangement as claimed in claim 15, wherein the detection-side engagement comprises insertion recesses formed circumferentially to have a range corresponding to the resilient latching pawls, engaging protrusions formed between the adjacent insertion recesses to protrude radially, and a circumferential groove formed at a position interior of the insertion recesses and the engaging protrusions.
